# EUROPÄISCHE PATENTANMELDUNG

(11) **EP 1 383 227 A2**
(43) Veröffentlichungstag der Anmeldung: **21.01.2004**
(21) Anmeldenummer: 03015298.7
(22) Anmeldetag: 07.07.2003
(51) Int. Cl.: H02K 5/128, H02K 15/00

(54) **Nasslaufender Elektromotor und Verfahren zu seiner Herstellung**

(30) Priorität: 17.07.2002 DE 10232389
(71) Anmelder: Liebherr-Aerospace Lindenberg GmbH, 88161 Lindenberg/Allgäu (DE)
(72) Erfinder: Bildstein, Markus, Dipl.-Ing. (FH), 87534 Oberstaufen (DE)
(74) Vertreter: Laufhütte, Dieter, Dr.-Ing.

(57) **Zusammenfassung**

Die Erfindung betrifft einen naßlaufenden Elektromotor mit einem Rotor, einem Polschuhe aufweisenden Stator und einer zwischen Rotor und Stator angeordneten Kunststoffhülse. Erfindungsgemäß sind zwischen den Polschuhen Füllstücke derart angeordnet, daß diese unter Bildung einer geschlossenen Bohrung, die als Abstützung für die Kunststoffhülse dient, miteinander verbunden sind.

## Beschreibung

Die Erfindung betrifft einen naßlaufenden Elektromotor nach dem Oberbegriff des Anspruchs 1.

Ein derartiger Elektromotor weist einen Rotor, einen Polschuhe aufweisenden Stator und eine zwischen Rotor und Stator angeordnete Kunststoffhülse auf. Wenn man bei den bekannten Motoren die Induktivität verändert, so ist es bekannt, die Induktivität durch Vorschalten von Drosselspulen zu erhöhen. Hiermit geht jedoch ein höheres Gewicht des Motors einher. Zusätzlich ist mehr Bauraum notwendig und die Zuverlässigkeit des Motors ist reduziert.

Aufgabe der Erfindung ist es, einen gattungsgemäßen naßlaufenden Elektromotor derart weiter zu bilden, daß die Kunststoffhülse vom Stator derart gestützt werden kann, daß sie hydraulisch mit hohem Innendruck belastet werden kann, ohne Schaden zu nehmen. Darüber hinaus soll die Induktivität des Motors verändert werden können, ohne eine Auswirkung auf Gewicht, Bauraum und Zuverlässigkeit des Motors.

Erfindungsgemäß wird diese Aufgabe dadurch gelöst, daß ausgehend von einem naßlaufenden Elektromotor mit einem Rotor, einem Polschuhe aufweisenden Stator und einer zwischen Rotor und Stator angeordneten Kunststoffhülse zwischen den Polschuhen Füllstücke derart angeordnet sind, daß diese unter Bildung einer geschlossenen Bohrung, die als Abstützung für die Kunststoffhülse dient, miteinander verbunden sind. Hierdurch wird eine gleichmäßige Abstützung des Kunststoffrohres durch die Stützbohrung sichergestellt, so daß Innendrücke von 350 bar problemlos auf der Kunststoffhülse lasten können, ohne daß diese zerstört wird.

Vorteilhafte Ausgestaltungen der Erfindung ergeben sich aus den sich an den Hauptanspruch anschließenden Unteransprüchen.

Demnach können die Füllstücke aus Schichten von elektrisch isolierten Blechen gefertigt sein. Hierdurch werden in vorteilhafter Weise die Wirbelströme reduziert.

Vorteilhaft können auch zwischen Füllstück und Statorpolen dünne, elektrisch isolierende Folien angeordnet sein. Diese können beispielsweise aus Kapton bestehen und eine Dicke von ca. 0,075 mm aufweisen. Hierdurch werden die Wirbelströme weiter reduziert.

Gemäß einer besonders vorteilhaften Ausgestaltung sind die Füllstücke aus Blechen unterschiedlicher magnetischer Leitfähigkeit gefertigt. Hierdurch kann eine vorbestimmte und gewünschte Motorinduktivität erreicht werden.

Eine weitere vorteilhafte Ausgestaltung der Erfindung beinhaltet, daß die Füllstücke seitliche Ausnehmungen aufweisen, in die entsprechende Vorsprünge der Polschuhe greifen, um einen radialen Formschluß sicher zu stellen. Durch diesen radialen Formschluß mit dem Stator können die Füllstücke festgehalten werden, so daß sie während der Montage nicht herausfallen.

Die die Polschuhe bildenden Schichten aus Blech können unterschiedliche Blechdicken aufweisen, damit durch geeignete Kombination verschiedener Blechdicken eine Annäherung der Füllstücklänge an die Länge des Stators ohne Blechdickenveränderung durch Nacharbeit möglich ist.

Ein erfindungsgemäßes Verfahren zur Herstellung des vorgenannten naßlaufenden Elektromotors ergibt sich aus Anspruch 6. Besonders vorteilhafte Ausgestaltungen dieses Verfahrens ergeben sich aus den sich anschließenden Ansprüchen 7 bis 9.

Gemäß dem erfindungsgemäßen Herstellungsverfahren können die Bleche zur Herstellung der Füllstücke während ihrer Montage durch Formbleche eingebracht werden. Die Formbleche bestehen aus einem ringförmigen Stützkörper und Einzelblechen jedes Füllstückes. Nach der Positionierung werden die ringförmigen Stützkörper von den Einzelblechen entfernt.

Vorteilhaft kann während und/oder nach dem Entfernen der Stützkörper in die Spalte zwischen den Formstücken und den Polschuhen Wicklungsimprägnierharz und/oder Wicklungsfüllharz gegossen werden, wodurch gewährleistet wird, daß die Füllstücke in ihrer Position festsitzen und fixiert sind.

Um einen für die Stützwirkung vorteilhaften, radial nach außen gerichteten metallischen Kontakt zwischen den Füllstücken und Polschuhen sicher zu stellen, werden vor Eindringen des Harzes die Stützkörper aufgeweitet.

Um die nach innen orientierte Kraft in Folge Rückfederung der Stützkörper zu reduzieren, werden die Stützkörper derart verformt, daß sie nach ihrer Aufweitung plastisch verformt bleiben. Dies wird insbesondere durch eine geeignete Formgebung der Stützkörper, d.h. beispielsweise die Wahl einer geringen Wandstärke, unterstützt.

Weitere Einzelheiten und Vorteile der Erfindung werden anhand eines in der Zeichnung dargestellten Ausführungsbeispiels näher beschrieben. Es zeigen:
- Figur 1:: einen Längsschnitt durch ein Ausführungsbeispiel eines naßlaufenden Elektromotors gemäß der vorliegenden Erfindung,
- Figur 2:: einen Schnitt entlang der Schnittlinie A-A in Figur 1,
- Figur 3:: eine vergrößerte Darstellung des Details X gemäß Figur 2,
- Figur 4:: einen Schnitt durch den Motor gemäß Figur 1 entlang der Schnittlinie A-A, jedoch während der Montage und
- Figur 5:: das Detail Y gemäß Figur 4.

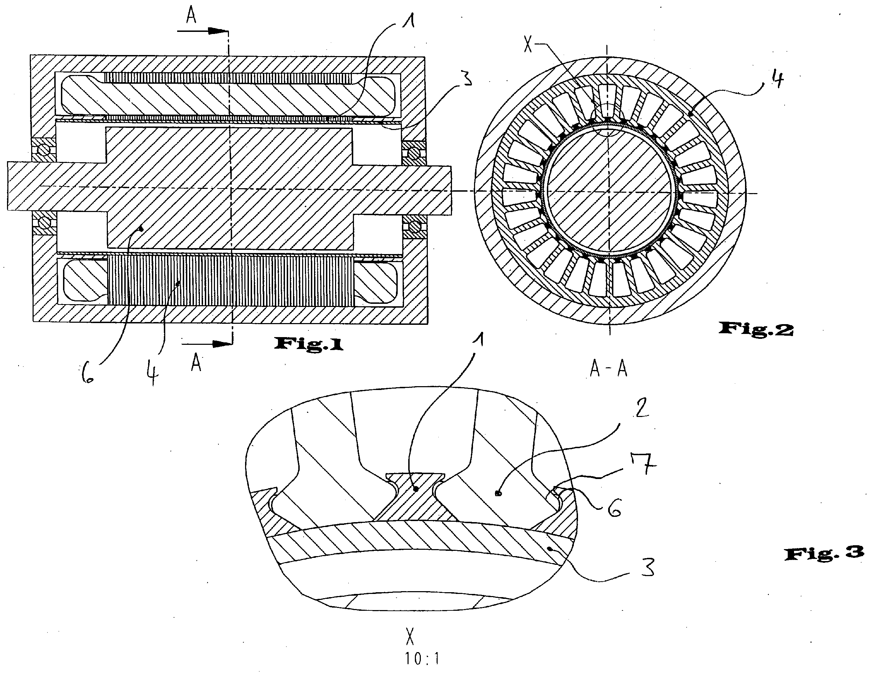

In Figur 1 ist ein naßlaufender Elektromotor dargestellt, wie er von seinem grundsätzlichen Aufbau bereits bekannt ist. Er weist einen Rotor 6, einen Stator 4 und eine Kunststoffhülse 3 auf.

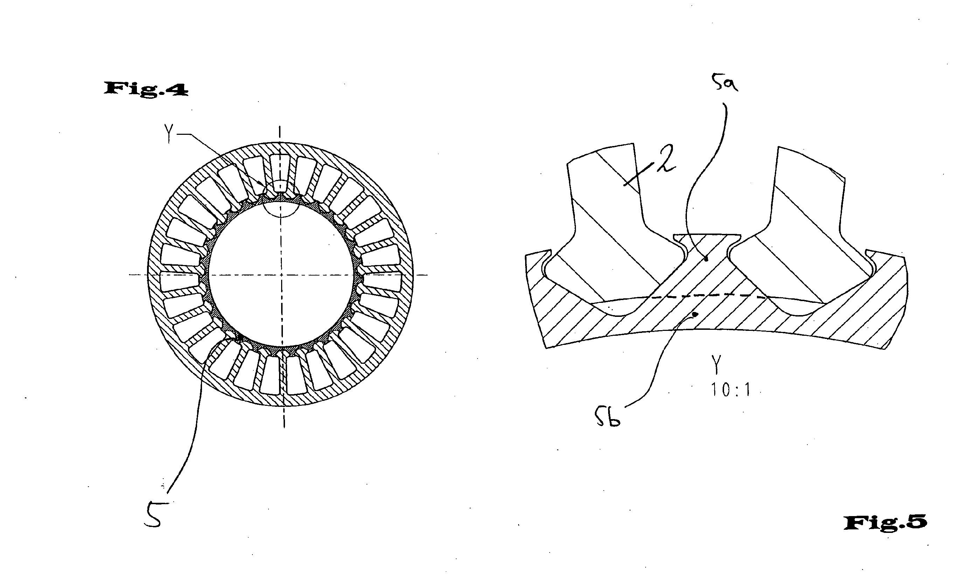

In der Detaildarstellung gemäß Figur 3 ist zu erkennen, daß die Position der Polschuhe 2 im wesentlichen durch die Formgebung des Stators 4 bestimmt wird. Die Füllstücke 1, die zwischen den Polschuhen angeordnet sind, weisen entsprechende Ausnehmungen 6 auf und die Polschuhe 2 weisen Vorsprünge 7 auf, die in die entsprechenden Ausnehmungen eingreifen. Insgesamt ergibt sich durch die Füllstücke und Ausnehmungen eine geschlossene Bohrung, in der die Kunststoffhülse 3 gleichmäßig abgestützt ist. Hierdurch kann die Kunststoffhülse 3 hohen Drücken Stand halten, da diese auf die durch die Polschuhe 2 und Füllstücke 1 gebildete Oberfläche übertragen wird.

Anhand der Figuren 4 und 5 kann ein Verfahren zur Herstellung eines Elektromotors mit den Füllstücken 1 gemäß Figur 3 erläutert werden. Demnach wird der Stator mit seinen Polschuhen 2 in ein Formblech 5 eingebettet, wobei das Formblech 5 aus einem unteren Bereich, nämlich einem ringförmigen Stützkörper 5 b und einem oberen Bereich, nämlich den Einzelblechen 5 a besteht. Die Einzelbleche 5a entsprechenden späteren Füllstücken 1. Nach entsprechender Positionierung des Formblechs 5 wird der ringförmige Stützkörper 5 b von den Einzelblechen 5a getrennt, so daß das Formblech 5 aufgetrennt wird. Während oder auch nach dem Entfernen des Stützkörpers kann in die Spalte zwischen den Formstücken 1 und den Polschuhen 2 Wicklungsimprägnier- und/oder Wicklungsfüllharz gegossen werden.

Elektromotoren der vorliegenden Erfindung können für beliebige Anwendungen eingesetzt werden. Besonders vorteilhaft lassen sie sich für elektrohydraulische Antriebe von Flugzeugsteuerungsaktuatoren einsetzen.

## Patentansprüche

1. Naßlaufender Elektromotor mit einem Rotor (6), einem Polschuhe (2) aufweisenden Stator (4) und einer zwischen Rotor (6) und Stator (4) angeordneten Kunststoffhülse (3),
**dadurch gekennzeichnet,**
**daß** zwischen den Polschuhen (2) Füllstücke (1) derart angeordnet sind, daß diese unter Bildung einer geschlossenen Bohrung, die als Abstützung für die Kunststoffhülse (3) dient, miteinander verbunden sind.

2. Elektromotor nach Anspruch 1, **dadurch gekennzeichnet, daß** die Füllstücke (1) aus Schichten von elektrisch isolierten Blechen gefertigt sind.

3. Elektromotor nach Anspruch 1 oder 2, **dadurch gekennzeichnet, daß** die Füllstücke (1) aus Blechen unterschiedlicher magnetischer Leitfähigkeit hergestellt sind.

4. Elektromotor nach einem der Ansprüche 1 bis 3, **dadurch gekennzeichnet, daß** die Füllstücke (1) seitlich Ausnehmungen (6) aufweisen, in die entsprechende Vorsprünge (7) der Polschuhe (2) greifen, um einen radialen Formschluß sicherzustellen.

5. Elektromotor nach einem der Ansprüche 2 bis 4, **dadurch gekennzeichnet, daß** die die Polschuhe (2) bildenden Schichten aus Blech unterschiedliche Blechdicken aufweisen.

6. Verfahren zum Herstellen eines Elektromotors nach einem der Ansprüche 1 bis 5, **dadurch gekennzeichnet, daß** die Bleche zur Herstellung der Füllstücke (1) während Ihrer Montage durch Formbleche (5) eingebracht werden, wobei das jeweils ein Einzelblech (5a) jedes Füllstückes (1) mit einem ringförmigen Stützkörper (5b) verbindende Formblech (5) nach der Positionierung durch Entfernung des ringförmigen Stützkörpers (5b) von den Einzelblechen (5a) getrennt wird.

7. Verfahren nach Anspruch 6, **dadurch gekennzeichnet, daß** während und/oder nach dem Entfernen der Stützkörper (5b) in die Spalte zwischen den Formstücken (1) und den Polschuhen (2) Wicklungsimprägnier- und/oder Wicklungsfüllharz gegossen wird.

8. Verfahren nach Anspruch 6 oder Anspruch 7, **dadurch gekennzeichnet, daß** die Stützkörper (5b) vor Einbringen des Harzes aufgeweitet werden.

9. Verfahren nach Anspruch 8, **dadurch gekennzeichnet, daß** die Stützkörper (5b) nach ihrer Aufweitung plastisch verformt sind.
